# EUROPEAN PATENT SPECIFICATION

(11) **EP 3 459 402 B1**
(45) Date of publication and mention of the grant of the patent: **03.06.2020**
(21) Application number: 18200473.9
(22) Date of filing: 06.04.2010
(51) Int. Cl.: A47J 27/04, A47J 27/62, F24C 3/12, F24C 15/32

(54) **METHOD FOR CONTROLLING COOKER**
REGELUNGSVERFAHREN FÜR EINE KOCHVORRICHTUNG
PROCÉDÉ DE COMMANDE D'UN APPAREIL DE CUISSON

(30) Priority: 06.04.2009 KR 20090029658
(43) Date of publication of application: 27.03.2019
(62) Divisional of application: 10761846.4
(73) Proprietor: LG ELECTRONICS INC., Yeongdeungpo-Gu Seoul 07336 (KR)
(72) Inventor: Choi, Sung-Ho, Gyoungsangnam-do 641-711 (KR); Kim, Su-Hwan, Gyoungsangnam-do 641-711 (KR); Lee, Sang-Ki, Gyoungsangnam-do 641-711 (KR); Oh, Kwang-Suk, Gyoungsangnam-do 641-711 (KR); Kim, Jeong-Kil, Gyoungsangnam-do 641-711 (KR); Shin, Jang-Mo, Gyoungsangnam-do 641-711 (KR)
(74) Representative: Vossius & Partner Patentanwälte Rechtsanwälte mbB

(56) References cited:
- EP-A1- 1 726 881
- JP-A- 2007 303 816
- US-A1- 2004 232 140

## Description

### [Technical Field]

The present disclosure relates to a cooker, and more particularly, to a method for controlling a cooker that cooks a food using steam.

### [Background Art]

Cookers are home appliances that heat a food using electricity or gas. In recent, cookers in which a steam function for supplying steam into a food is added to supplement moisture which is evaporated during the cooking of the food are being put on the market.

US 2004/232140 A1 relates to a high-frequency heating apparatus with steam generation function and a control method thereof.

JP 2007 303816 A relates to a cooker, for heating-treating a heated object, by supplying heat from heat sources to a heating chamber for storing the heated object, being provided with a steam generation part provided inside the heating chamber, an evaporation part heating heater, a water supply means, and a steam supply operation means.

EP 1 726 881 A1 relates to a steam cooker and a tray-shaped case of a steam temperature-raising device having a recessed part into which steam from a steam generator flows through steam supply ports provided in a first sidewall. First and second steam superheaters are placed in the recessed part of the tray-shaped case so as to be axisymmetrical with respect to a center line.

### [Disclosure]

### [Technical Problem]

However, steam supplied into the cooking chamber may be discharged into the cooker.

### [Technical Solution]

Embodiments provide a method of controlling a cooker configured to effectively and safely cook a food using steam.

In one embodiment, a method for controlling a cooker includes: supplying energy into a cooking chamber by at least one heating source; furnishing steam water by a water supply pump for generating steam supplied to the cooking chamber; and generating steam by heating steam water furnished by means of the water supply pump, by a steam generator, wherein the operation of the steam heater is completed after the operation of the steam pump is ended.

The details of one or more embodiments are set forth in the accompanying drawings and the description below. Other features will be apparent from the description and drawings, and from the claims.

### [Advantageous Effects]

According to the embodiments, the food may be further effectively and safely cooked using steam.

A cooker controlling method as described above expects itself to have the following effects.

First, in the embodiments, steam is furnished into a cooking chamber while food is cooked in the cooking chamber. Thus, a more effective cooking by steam furnished into a cooking chamber could be performed.

Also, in the embodiments, a phenomenon that steam furnished into a cooking chamber leaks through a porous part for transferring the energy of a heater installed outside the cooking chamber to the cooking chamber is reduced. Thus, operation reliability of a product may be more improved.

In addition, in the embodiments, when steam is furnished into a cooking chamber, a convection fan and a convection motor are operated. Thus, steam supplied into the cooking chamber will be more evenly circulated inside the cooking chamber.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### [Description of Drawings]

Fig. 1 is a schematic view of a cooker controlled by a method for controlling a cooker according to an embodiment.
Fig. 2 is a control flowchart illustrating a method for controlling a cooker according to a first embodiment.
Fig. 3 is a graph illustrating operating times of components according to the first embodiment.
Figs. 4 and 5 are control flowcharts illustrating a method for controlling a cooker according to a second embodiment.
Figs. 6 and 7 are graphs illustrating operating times of components according to the second embodiment.

### [Best Mode]

Hereinafter, a cooker controlling method according to embodiments will be explained in detail with reference to the accompanying drawings.

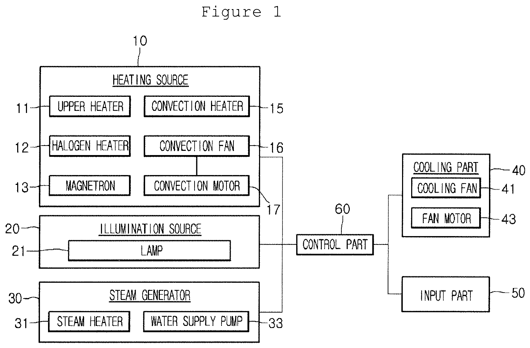

Fig. 1 is a schematic view of a cooker controlled by a method for controlling a cooker according to an embodiment.

Referring to Fig. 1, in the current embodiment, a heating source 10 for cooking food in a cooking chamber includes an upper heater 11, a halogen heater 12 and a magnetron 13. The upper heater 11 is installed in the upper portion of a cooking chamber to provide radiating heat for the cooking chamber. As the upper heater 11, a Sheath heater may be used. And, the halogen heater 12 provides radiating heat including light and heat to the cooking chamber. The halogen heater 12 provides radiating heat to the cooking chamber through a porous part (not shown) installed in the upper portion of the cooking chamber and formed at the ceiling of the cooking chamber. The magnetron 13 oscillates microwave irradiated inward the cooking chamber.

Also, the heating source 10 further includes a convention heater 15, a convention fan 16 and a convection motor 17. The convection heater 15, the convection fan 16 and the convection motor 17 supply convective heat to the cooking chamber. More particularly, since air heated by the convection heater 15 circulates around the cooking chamber by the operation of the convection fan 16, convective heat is supplied to the cooking chamber. The convection motor 17 provides a drive force for the operation of the convection fan 16.

An illumination source 20 illuminates inside the cooking chamber. As the illumination source 20, a lamp 21 may be used.

And, a steam generator 30 may be provided to supply steam into the cooking chamber. The steam generator 30 includes a steam heater 31 and a water supply pump 33. The steam heater 31 heats steam water for generating steam supplied to the cooking chamber. The water supply pump 33 supplies steam water heated by the steam heater 31.

For the cooling of the heating source 10 and the ventilation of the inside of the cooking chamber, a cooling part 40 may be provided. The cooling part 40 includes a cooling fan 41 and a fan motor 43. That is, by means of air flowing by the cooling fan 41 and the fan motor 43, the encapsulating parts of the halogen heater 12, a magnetron 13, a steam heater 31 and a water supply pump 33 may be cooled. Also, in a case the fan motor 43 is driven, the cooling fan 41 operates so that the exterior air may be supplied inside the cooking chamber, and air let inside the cooking chamber may be drained to the exterior of the cooking chamber in a state of containing oil and moisture, etc. existing in the cooking chamber.

A manipulation signal for the operation of the heating source 10 and the steam generator 30 is input to an input part 50. The input part 50 includes a first input part 51 receiving a manipulation signal for cooking food in the cooking chamber and a second input part 53 receiving a manipulation signal for the supply of steam into the cooking chamber. Herein, the first input part 51 receives a manipulation signal for cooking food in the cooking chamber using at least one of the heating sources 10 and the steam generator 30 (hereinafter, for the convenience of explanation, called a 'manipulation signal (OS0)' and a manipulation signal for cooking food in the cooking chamber using at least one of the heating sources 10 only (hereinafter, for the convenience of explanation, called a 'first manipulation signal (OS1)'. More particularly, according to the manipulation signal (OS0), the operation start and end time of any one or more of the heating sources 10, or the operation start and end time of any one or more of the heating sources 10 and the operation start and end time of the steam generator 30 is set. Herein, the operation of the steam generator 30 indicates the operation of a steam pump 31 and a water supply pump 33 in an actual meaning. And, the second input part 53 receives an manipulation signal for the start and end of a steam supplying into the cooking chamber among the operation of the heating source 10 (hereinafter, for the convenience of explanation, called 'second and third manipulation signals (OS02)(OS03)'. More particularly, according to the input time of the second manipulation signal (OS2), the operation start time of the steam generator is set. And according to the input time of the third manipulation signal (OS3), the operation end time of the steam generator 30 is set.

The control part 60 controls the operation of the heating source 10, the illumination source 20, the steam generator 30 and the cooling part 40 according to a manipulation signal inputted into the input part 50. That is, in actuality, the control part 60 controls the operation of the upper heater 11, the halogen heater 12, the convection heater 15, the convection motor 17, the lamp 21, the steam heater 31, the water supply pump 33 and the fan motor 43.

Hereinafter, a method for controlling a cooker according to a first embodiment will be described in detail with reference to the accompanying drawings.

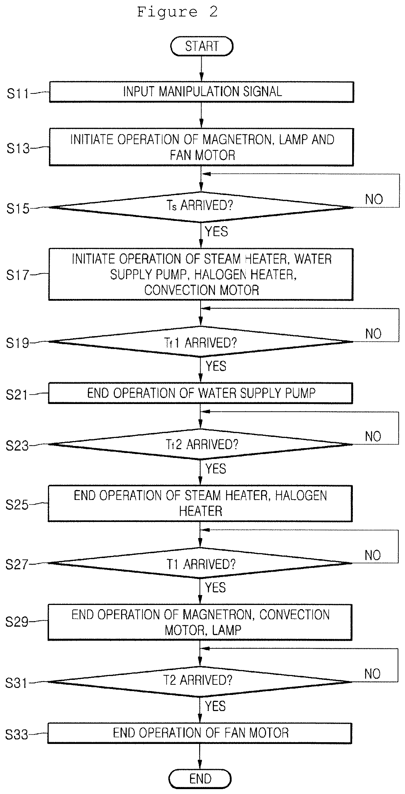

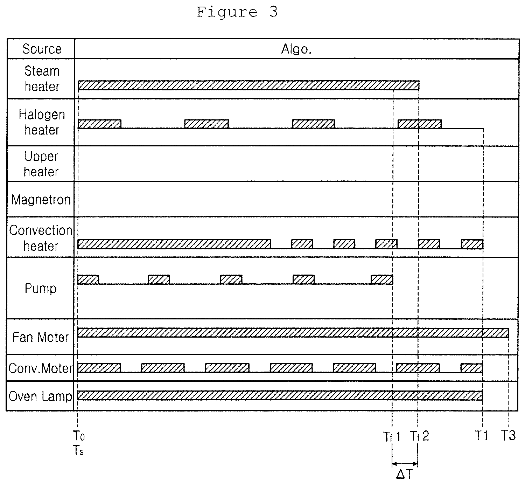

Fig. 2 is a control flowchart illustrating a method for controlling a cooker according to a first embodiment. Fig. 3 is a graph illustrating operating times of components according to the first embodiment.

Referring to Figs. 2 and 3, initially the input part 50, more particularly, the first input part 51 receives a manipulation signal (OSO) in operation S11.

In operation S11, in a case the first input part 51 receives the manipulation signal (OS0), the control part 60 controls to initiate the operation of a halogen heater 12, a convection heater 15, a convection motor 17, a lamp 21 and a fan motor 43 at a preset heating start time (TO) according to the manipulation signal (OSO) (S13). At this time, the halogen heater 12 repeats an ON/OFF action at a preset time interval according to the manipulation signal (OS0). And, the convection heater 15 repeats an ON/OFF action to maintain the cooking chamber temperature at a preset temperature according to the manipulation signal (OS0), and the convection motor repeats an ON/OFF action at a preset time interval according to the manipulation signal (OS0). The lamp 21 and the fan motor 43 continue ON action. Thus, food cooking in the cooking chamber is initiated by the halogen heater 12 and the convection heater 15. Also, illumination inside the cooking chamber by the lamp 21, and the cooling of said components and the ventilation of the cooking chamber by the cooling fan 41 are performed.

And, after the operation of the halogen heater 12, the convection heater 15, the convection motor 17, the lamp 21 and the fan motor 43 was initiated, the control part 60 determines if they have arrived at a preset steam generating start time (Ts) according to the manipulation signal (OSO) (S15). In the current embodiment, the steam generating start time (Ts) is set as the same point as the heating start time (TO). However, based on food cooked in the cooking chamber, the steam generating start time (Ts) may be set at a different point from the heating start time (TO).

In operation S15, determined that the steam generating start time (Ts) has arrived, the control part 60 controls to initiate the operation of the steam heater 13 and the water supply pump 33 (S17). Thus, by the operation of the steam heater 31 and the water supply pump 33, steam is supplied into the cooking chamber. More particularly, steam water supplied by the water supply pump 33 is heated by means of the steam heater 31 and then furnished into the cooking chamber in a steam form. Also, by the operation of the halogen heater 12, a phenomenon that steam furnished into the cooking chamber leaks out of the cooking chamber through a porous part, which transfers the light and heat of the halogen heater 12 to the cooking chamber, to cause damage to the halogen heater 12, etc., is prevented. In addition, by circulating air inside the cooking chamber through the convection fan 16 driven by the operation of the convection motor 17, steam furnished into the cooking chamber may circulate inside the cooking chamber more effectively.

In operation S17, the steam heater 31 continues an ON action, and the water supply pump 33 repeats ON/OFF action.

Next, after the operation of the steam heater 21 and the water supply pump 33 was initiated, the control part 60 determines if they have arrived at a preset water supply end time (Tf1) according to the manipulation signal (OSO) (S19). In operation S19, determined that they have arrived at the water supply end time (Tf1), the control part 60 controls to finish the operation of the water supply pump 33 (S21). Thus, the furnishing of steam water heated by the steam heater 31 is ended. However, since the steam heater 31 continues its operation, steam water pre-supplied by the water supply pump 33 is continuously heated by the steam heater 31 and then furnished into the cooking chamber in a steam form.

And, the control part 60 determines if a preset steam heating end time (Tf2) according to the manipulation signal (OSO) has arrived after the operation of the water supply pump 33 is ended (S23). In operation S23, determined that the steam heating end time (Tf2) has arrived, the control part 60 controls to finish the operation of the steam heater 31 (S25). Therefore, by completing the operation of the steam heater 31, a steam furnishing into the cooking chamber is ended.

Next, the control part 60 determines if a preset heating end time (T1) according to the manipulation signal (OSO) has arrived after the operation of the steam heater 31 is ended (S27). In operation S27, determined that the heating end time (T1) has arrived, the control part 60 controls to end the operation of the halogen heater 12, the convection heater 15 and the convection motor 17 and the operation of the lamp 21 (S29). Thus, food cooking in the cooking chamber by the halogen heater 12 and the convection heater 15, and illumination inside the cooking chamber by the lamp 21 are ended.

And, after the operation of the halogen heater 12, the convection heater 15 and the convection motor 17 and the operation of the lamp 21 was ended, the control part 60 determines if a preset fan motor end time (T2) according to the manipulation signal (OSO) has arrived (S31). In operation S31, determined that the fan motor end time (T2) has arrived, the control part 60 controls to end the operation of the fan motor 43. Thus, the cooling of said component and the ventilation of a kitchen by the fan motor 43 is ended.

### [Mode for Invention]

Hereinafter, a method for controlling a cooker according to a second embodiment will be described in detail with reference to the accompanying drawings.

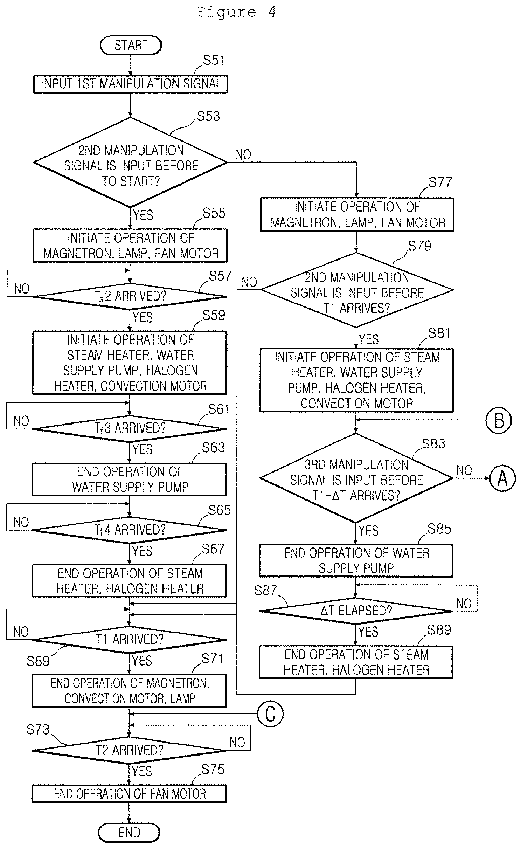

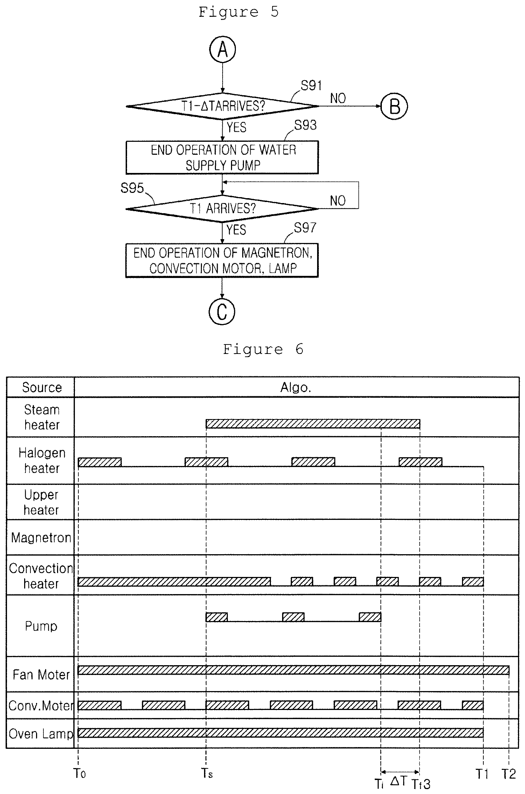

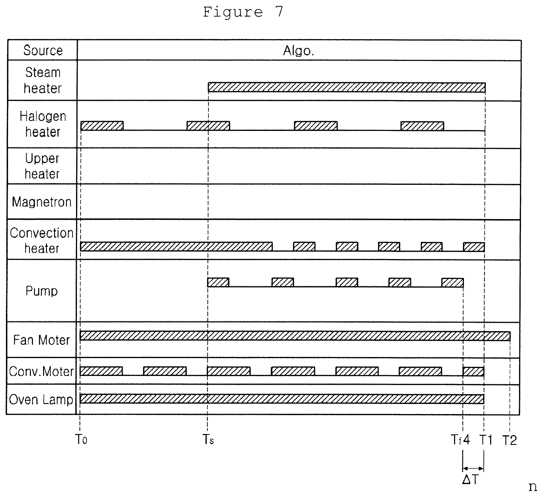

Figs. 4 and 5 are control flowcharts illustrating a method for controlling a cooker according to a second embodiment. Figs. 6 and 7 are graphs illustrating operating times of components according to the second embodiment.

Referring to Figs 4 to 7, initially an input part 50, more particularly a first input part 51 receives a first manipulation signal (OS1) (S51). In operation S51, in a case the first input part 51 receives the first manipulation signal (OS1), the control part 60 determines if the input part 50, that is a second input part 53, received a second manipulation signal (OS2) for the operation of the steam heater 31 and the water supply pump 33 before a preset heating start time (TO) according to the first manipulation signal (OS1) has arrived (S53).

In operation S53, determined that the second manipulation signal (OS2) was input before the heating start time (TO) has arrived, the control part 60 controls to initiate the operation of the halogen heater 12, the convection heater 15, the convection motor 17, the lamp 21 and the fan motor 43 at the heating start time (TO) (S55).

And, the control part 60 determines if a preset steam generation start time (Ts) according to the second manipulation signal (OS2) has arrived after the operation of the halogen heater 12, the convection heater 15, the convection motor 17, the lamp 21 and the fan motor 43 was initiated (S57). In operation S57, determined that the steam generation start time (Ts) has arrived, the control part 60 controls to initiate the operation of the steam heater 31 and the water supply pump 33 (S59).

Next, the control part 60 determines if a preset water supply end time (Tf1) according to the second manipulation signal (OS2) has arrived after the operation of the water supply pump 33, was initiated (S61). In operation S61, determined that the water supply end time (Tf1) has arrived, the control part 60 controls to end the operation of the water supply pump 33 (S63).

After the operation of the water supply pump 33 was ended, the control part 60 determines if a preset steam heating end time (Tf2) according to the second manipulation signal (OS2) has arrived (S65). In operation S65, determined that the steam heating end time (Tf2) has arrived, the control part 60 controls to end the operation of the steam heater 31 (S67).

And, the control part 60 determines if a preset heating end time (T1) according to the first manipulation signal (OS1) has arrived after the operation of the steam heater 31 was ended (S69). In operation S69, determined that the heating end time (T1) has arrived, the control part 60 controls to end the operation of the halogen heater 12, the convection heater 15 and the convection motor 17 and the operation of the lamp 21 (S71).

The control part 60 determines if a preset fan motor end time (T2) according to the first manipulation signal has arrived, after the operation of the halogen heater 12, the convection heater 15 and the convection motor 17 and the operation of the lamp 21 was ended (S73). In operation S73, determined that the fan motor end time (T2) has arrived, the control part 60 controls to end the operation of the fan motor 43 (S75). To be sure, a specific operation of the halogen heater 12, the convection heater 15, the convection motor 17, the steam heater 31, the water supply pump 33, the lamp 21 and the fan motor 43 of the operations S51 through S75 of the current embodiment as described above may be substantially the same as that of operations S11 to S33 of the aforementioned first embodiment. In other words, in a case the first input part 51 receives the manipulation signal (OSO) and in a case the first input part 51 receives the first manipulation signal (OS1) and then the second input part 53 receives the second manipulation signal (OS2) before the heating operation start time (TO) is initiated, a specific operation of the halogen heater 12, the convection heater 15, the convection motor 17, the steam heater 31, the water supply pump 33, the lamp 21 and the fan motor 43 is the same between them. Of course, the steam generation start time (Ts), the water supply end time (Tf1) and the steam heating end time (Tf2) may be differently set based on the manipulation signal (OSO) and the second manipulation signal (OS2). Therefore, in the control according to the operations S51 to S75 of the current embodiment, a specific operation of the halogen heater 12, the steam heater 15, the convection motor 17, the steam heater 31, the water supply pump 33, the lamp 21 and the fan motor 43 could be understood more definitely with reference to Fig. 3.

In a case the control part 60 determines that the second manipulation signal (OS2) was not inputted in operation S53 before a heating start time (TO) has arrived, the control part 60 controls to initiate the operation of the halogen heater 12, the convection heater 15, the convection motor 17, the lamp 21 and the fan motor 43 at the heating start time (TO) (S77). And, the control part 60 determines again if the second manipulation signal OS2 was inputted before the heating end time (T1) has arrived (S79).

In operation S79, determined that the second manipulation signal (OS2) was inputted before the heating end time (T1) has arrived, the control part 60 controls to initiate the operation of the steam heater 31 and the water supply pump 33 at a time (Ts2) when the second manipulation signal (OS2) is input (S81). When the operation of the steam heater 31 and the water supply pump 33 is initiated, the control part 60 determines if the second input part 53 received a third input signal (OS3) for the end of the steam heater 31 and the water supply pump 33 before a point, that is a previous time by a preset remaining water removal time (ΔT) from the heating end time (T1), has arrived (S83).

In operation S83, determined that the third manipulation signal (OS3) was input before a previous time by a preset remaining water removal time (ΔT) from the heating end time (T1) has arrived, the control part 60 controls to end the operation of the water supply pump 33 at a time (Tf3) when the third operation time (OS3) is input (S85). And, when the operation of the water supply pump 33 is ended, the control part 60 determines if the remaining water removal time (ΔT) has elapsed, and controls to end the operation of the steam heater 31 at a time (Tf4) when the remaining water removal time (ΔT) has elapsed from the input time (Tf3) (S87) (S89).

In operation S89, if the operation of the steam heater 31 is ended, the operations S69 through S75 are performed. As described above, specific operations of the upper heater 11, the convection heater 15, the convection motor 17, the steam heater 31, the water supply pump 33, the lamp 21, and the fan motor 43 in operation S51, operation S53, operations S77 through S83, operations S77 through S89, operation S69 and operation S75 could be understood more definitely with reference to Fig. 6.

In the meantime, in operation S83, in a case the third manipulation signal (OS3) was not inputted before a previous time by a preset remaining water removal time (ΔT) from the heating end time (T1) has arrived, the control unit 60 controls to end the operation of the water supply pump 33 when a previous time by a preset remaining water removal time (ΔT) from the heating end time (T1) arrives (S91) (S93).

Next, the control part 60 determines if the heating end time (T1) has arrived (S95). Then, determined that the heating end time (T1) has arrived, the control part 60 controls to end the operation of the halogen heater 12, the convection heater 15, the convection motor 17, the steam heater 31 and the lamp 21 (S97). And, the control part 60 performs the operations S73 and S75. In the current embodiment, specific operations of the halogen heater 12, the convection heater 15, the convection motor 17, the steam heater 31, the water supply pump 33, the lamp 21 and the fan motor 43 in operation S51, operation S53, operations S77 through S83, operations S91 through S97, operation S73 and operation S75 could be understood more definitely with reference to Fig. 7.

While it has not been described in detail in the above-mentioned embodiments, in the course of cooking food in the cooking chamber, the operation of the upper heater, the halogen heater, the magnetron, the convection heater, the convection motor, the steam heater and the water supply pump would be ended when the cooking chamber is opened, that is, when a door entering into the cooking chamber is open. Considering it is the fact applying to a general cooker, for example an electronic range, the related detailed description will be omitted.

## Claims

1. A method for controlling a cooker, comprising:
supplying energy into a cooking chamber by at least one heating source (10) based on receiving a manipulation signal (OS0);
ventilating the cooking chamber by a fan motor (43) based on the manipulation signal (OS0);
furnishing steam water by a water supply pump (33) for generating steam supplied to the cooking chamber and
generating steam by heating steam water furnished by the water supply pump (33) by a steam heater (31) based on arrived steam generating start time (Ts);
finishing the operation of the supply pump (33), if water supply end time (Tf1) has arrived;
finishing the operation of the steam heater (31), if steam heating end time (Tf2) has arrived;
finishing the operation of the at least one heating source (10), if heating end time (T1) has arrived; and
finishing the operation of the fan motor (43), if fan motor end time (T2) has arrived,
**characterized in that** the operation of the steam heater (31) is finished after the operation of the water supply pump (33) is finished.

2. The method according to claim 1, wherein the operation of the steam heater (31) and water supply pump (33) is initiated at the same time as or after the operation of the heating source (10).

3. The method according to claim 1, wherein the operation of the steam heater (31) and water supply pump (33) is initiated and completed according to a user choice before the operation of the heating source (10) is ended, separately of the operation start of the heating source (10).

4. The method according to claim 1, wherein the heating source (10) repeats an ON/OFF action at a preset time interval during a preset operation time.

5. The method according to claim 1, wherein the heating source (10) is a halogen heater (12) furnishing light and heat into the cooking chamber.

6. The method according to claim 5, wherein the halogen heater (12) transfers light and heat into the cooking chamber through a porous part installed outside the cooking chamber and formed at one side of the cooking chamber.

7. The method according to claim 1, wherein the heating source (10) comprises:
a convection heater (15);
a convection fan (16) circulating air in the cooking chamber to convect heat of the convection heater into the cooking chamber; and
a convection motor (17) providing a drive force for the operation of the convection fan (16).

8. The method according to claim 7, wherein the convection heater (31) repeats an ON/OFF action to maintain the cooking chamber temperature at a preset cooking temperature during a preset operation time.

9. The method according to claim 7, wherein the convection motor (17) repeats an ON/OFF action at a preset time interval during a preset operation time.

10. The method according to claim 1, wherein the steam heater (31) continues an ON action during a preset operation time or during an operation time by a user choice.

11. The method according to claim 1, wherein the water supply pump (33) repeats a pumping action at a preset time interval during a preset operation time or during an operation time by a user choice.

12. The method according to claim 1, wherein the operation of the steam heater (31) and water supply pump (33) is initiated and completed at a respective preset time, separately of a user choice.

## Patentansprüche

1. Verfahren zur Steuerung eines Garers, das aufweist:
Zuführen von Energie in einen Garraum durch mindestens eine Heizquelle (10) auf der Grundlage des Empfangs eines Bediensignals (OSO);
Ventilieren des Garraums mit einem Ventilatormotor (43) beruhend auf dem Bediensignal (OSO);
Bereitstellen von Dampfwasser durch eine Wasserzufuhrpumpe (33) zum Erzeugen von Dampf, der dem Garraum zugeführt wird, und
Erzeugen von Dampf durch Beheizen von Dampfwasser, das mit Hilfe der Wasserzufuhrpumpe (33) bereitgestellt wird, durch eine Dampfheizung (31) auf der Grundlage einer erreichten Dampferzeugungs-Startzeit (Ts);
Beenden des Betriebs der Wasserzufuhrpumpe (33), wenn eine Wasserzufuhr-Endzeit (Tf1) erreicht ist;
Beenden des Betriebs der Dampfheizung (31), wenn eine Dampfheizungs-Endzeit (Tf2) erreicht ist;
Beenden des Betriebs der mindestens einen Heizquelle (10), wenn eine Heizendzeit (T1) erreicht ist; und
Beenden des Betriebs des Ventilatormotors (43), wenn die Ventilatormotor-Endzeit (T2) erreicht ist,
**dadurch gekennzeichnet, dass** der Betrieb der Dampfheizung (31) beendet wird, nachdem der Betrieb der Wasserzufuhrpumpe (33) beendet ist.

2. Verfahren nach Anspruch 1, wobei der Betrieb der Dampfheizung (31) und der Wasserzufuhrpumpe (33) zur gleichen Zeit wie der Betrieb der Heizquelle (10) oder danach initiiert wird.

3. Verfahren nach Anspruch 1, wobei der Betrieb der Dampfheizung (31) und der Wasserzufuhrpumpe (33) gemäß einer Benutzerauswahl vor Beendigung des Betriebs der Heizquelle (10) unabhängig vom Betriebsbeginn der Heizquelle (10) initiiert und abgeschlossen wird.

4. Verfahren nach Anspruch 1, wobei die Heizquelle (10) einen EIN/AUS-Vorgang in einem voreingestellten Zeitintervall während einer voreingestellten Betriebszeit wiederholt.

5. Verfahren nach Anspruch 1, wobei die Heizquelle (10) eine Halogenheizung (12) ist, die Licht und Wärme im Garraum bereitstellt.

6. Verfahren nach Anspruch 5, wobei die Halogenheizung (12) Licht und Wärme in den Garraum über ein poröses Teil überträgt, das außerhalb des Garraums installiert und an einer Seite des Garraums ausgebildet ist.

7. Verfahren nach Anspruch 1, wobei die Heizquelle (10) aufweist:
eine Konvektionsheizung (15);
einen Konvektionsventilator (16), der Luft im Garraum umwälzt, um Wärme der Konvektionsheizung in den Garraum mitzuführen; und
einen Konvektionsmotor (17), der eine Antriebskraft für den Betrieb des Konvektionsventilators (16) bereitstellt.

8. Verfahren nach Anspruch 7, wobei die Konvektionsheizung (31) einen EIN/AUS-Vorgang wiederholt, um die Garraumtemperatur auf einer voreingestellten Gartemperatur während einer voreingestellten Betriebszeit zu halten.

9. Verfahren nach Anspruch 7, wobei der Konvektionsmotor (17) einen EIN/AUS-Vorgang in einem voreingestellten Zeitintervall während einer voreingestellten Betriebszeit wiederholt.

10. Verfahren nach Anspruch 1, wobei die Dampfheizung (31) einen EIN-Vorgang während einer voreingestellten Betriebszeit oder während einer Betriebszeit durch eine Benutzerauswahl fortführt.

11. Verfahren nach Anspruch 1, wobei die Wasserzufuhrpumpe (33) einen Pumpvorgang mit einem voreingestellten Zeitintervall während einer voreingestellten Betriebszeit oder während einer Betriebszeit durch eine Benutzerauswahl wiederholt.

12. Verfahren nach Anspruch 1, wobei der Betrieb der Dampfheizung (31) und der Wasserzufuhrpumpe (33) zu einer jeweiligen voreingestellten Zeit getrennt von einer Benutzerauswahl initiiert und abgeschlossen wird.

## Revendications

1. Procédé de commande d'un appareil de cuisson, comprenant :
l'approvisionnement en énergie dans une chambre de cuisson par au moins une source de chauffage (10) sur la base de la réception d'un signal de manipulation (OSO) ;
la ventilation de la chambre de cuisson par un moteur de ventilateur (43) sur la base du signal de manipulation (OSO) ;
la fourniture de vapeur d'eau par une pompe d'alimentation en eau (33) pour générer de la vapeur fournie à la chambre de cuisson et
la génération de vapeur par chauffage de vapeur d'eau fournie par la pompe d'alimentation en eau (33) par un dispositif de chauffage de vapeur (31) sur la base de l'arrivée du moment de démarrage de génération de vapeur (Ts) ;
la fin de l'opération de la pompe d'alimentation (33), si le moment de fin d'alimentation en eau (Tf1) a été atteint ;
la fin de l'opération du dispositif de chauffage de vapeur (31), si le moment de fin de chauffage de vapeur (Tf2) a été atteint ;
la fin de l'opération de l'au moins une source de chauffage (10), si le moment de fin de chauffage (T1) a été atteint ; et
la fin de l'opération du moteur de ventilateur (43), si un moment de fin de moteur de ventilateur (T2) a été atteint,
**caractérisé en ce que** l'opération du dispositif de chauffage à vapeur (31) est terminée après que l'opération de la pompe d'alimentation en eau (33) est terminée.

2. Procédé selon la revendication 1, dans lequel l'opération du dispositif de chauffage à vapeur (31) et de la pompe d'alimentation en eau (33) est démarrée en même temps que ou après l'opération de la source de chauffage (10).

3. Procédé selon la revendication 1, dans lequel l'opération du dispositif de chauffage de vapeur (31) et de la pompe d'alimentation en eau (33) est démarrée et conclue en fonction du choix d'un utilisateur avant que l'opération de la source de chauffage (10) ne soit terminée, séparément du démarrage de l'opération de la source de chauffage (10).

4. Procédé selon la revendication 1, dans lequel la source de chauffage (10) répète une action MARCHE/ARRÊT à un intervalle prédéfini pendant une durée d'opération prédéfinie.

5. Procédé selon la revendication 1, dans lequel la source de chauffage (10) est un dispositif de chauffage halogène (12) fournissant de la lumière et de la chaleur à l'intérieur de la chambre de cuisson.

6. Procédé selon la revendication 5, dans lequel le dispositif de chauffage halogène (12) transfère de la lumière et de la chaleur à l'intérieur de la chambre de cuisson à travers une partie poreuse installée à l'extérieur de la chambre de cuisson et formée d'un côté de la chambre de cuisson.

7. Procédé selon la revendication 1, dans lequel la source de chauffage (10) comprend :
un dispositif de chauffage par convection (15) ;
un ventilateur de convection (16) faisant circuler l'air dans la chambre de cuisson pour transférer par convection la chaleur du dispositif de chauffage par convection dans la chambre de cuisson ; et
un moteur de convection (17) fournissant une force d'entraînement pour l'opération du ventilateur de convection (16).

8. Procédé selon la revendication 7, dans lequel le dispositif de chauffage par convection (31) répète une action MARCHE/ARRÊT pour maintenir la température de la chambre de cuisson à une température de cuisson prédéfinie pendant une durée d'opération prédéfinie.

9. Procédé selon la revendication 7, dans lequel le moteur de convection (17) répète une action MARCHE/ARRÊT à un intervalle prédéfini pendant une durée d'opération prédéfinie.

10. Procédé selon la revendication 1, dans lequel le dispositif de chauffage à vapeur (31) continue une action MARCHE pendant une durée d'opération prédéfinie ou pendant une durée d'opération choisie par un utilisateur.

11. Procédé selon la revendication 1, dans lequel la pompe d'alimentation en eau (33) répète une action de pompage à un intervalle prédéfini pendant une durée d'opération prédéfinie ou pendant une durée d'opération choisie par un utilisateur.

12. Procédé selon la revendication 1, dans lequel l'opération du dispositif de chauffage à vapeur (31) et de la pompe d'alimentation en eau (33) est démarrée et conclue à un moment prédéfini respectif, choisi séparément par un utilisateur.
